# EUROPEAN PATENT APPLICATION

(11) **EP 3 236 396 A1**
(43) Date of publication of application: **25.10.2017**
(21) Application number: 17164683.9
(22) Date of filing: 04.04.2017
(51) Int. Cl.: G06Q 10/00, G06Q 50/10, G06Q 30/04

(54) **A METHOD FOR CALLING A PHYSICAL SECURITY SERVICE AND PAYING FOR THIS SERVICE AND HARDWARE SYSTEM FOR IMPLEMENTING SUCH METHOD**

(30) Priority: 20.04.2016 LT 2016048
(71) Applicant: UAB "Eldes", 06313 Vilnius (LT)
(72) Inventor: Taicas, Arturas, LT-06313 Vilnius (LT); Zarumskis, Mindaugas, LT-06313 Vilnius (LT); Dranseika, Rolandas, LT-06313 Vilnius (LT); Serpetauskas, Vaidas, LT-06313 Vilnius (LT)
(74) Representative: Zaboliene, Reda

(57) **Abstract**

This description provides the invention, namely, a user preferable method for calling physical security services and the system of technical solutions hardware for implementing these methods.

From the technical point of view, the mobile operator (or other unit providing integrated services) intermediating between the recipient of security and mobile communication services and security companies and using its existing infrastructure provides additional benefits and value to both the service user and security companies. Service users are more likely to choose security services in advance when they do not need to commit for a subscription fee. A security company avoids some orders and administration of payments for them, gets more orders.

A system of technical solutions hardware for implementing such methods includes: alarm hardware installed in the protected object, the mobile recipient device, data center, and a monitoring and distribution station installed in a security company.

The entire system, implementing a security service more rapidly, contributes to the creation of a more secure environment.

## Description

### FIELD OF THE INVENTION

The invention relates to the field of security services for the protection of individuals or their property, in particular, a method for ordering a security service and paying for this service and technical system for implementing such method.

### DESCRIPTION OF RELATED ART

Patent document US9111430B2 (published on 5 January 2012) provides a security system, which sends a signal to a predetermined address (it can be a phone number) when an alarm in a protected object triggers. The provided solution does not mention anything about the involvement of security companies, so the recipient about alarm trigger must continue himself to take care of further reaction in addressing the consequences of the event.

The application WO2005089087A2 (published on 8 September 2009) provides a system for monitoring and responding to critical events, where, after having received a signal, the signal is processed and directed to the service responsible for responding (e.g. ambulance, police and / or others). A similar system is provided in the application WO2001047223A2 (published on 21 November 2000). The application mentions systems which are more for public organizations rather than specific security companies which react to needs for protection of individuals or their property. The application does not provide a method for paying for the service.

After a review of the field of art, it is possible to conclude that existing systems are not suitable for personal needs for protection of a user or his property;
it provides information about the triggered alarm, but does not offer further solutions;
even if it includes a transfer of a signal from the alarm to the relevant services, a user-friendly method for paying for the services is not provided;
it does not allow choosing the security guard from a number of companies according to the ability of security guards to provide a security service as early as possible;
usually, existing security companies apply the principle of subscription fees and payment only for specific provided services (when there are no subscription fees) is not able

This description provides the invention avoiding the above mentioned shortages of the field of art. With the system of the present invention, the user additionally avoids signing the contract with the security company, pays only for actually provided services, makes a single payment for mobile services and provided security services, security services can be provided more rapidly than after the conclusion of a contract with a single security company.

### SUMMARY OF THE INVENTION

This description of the invention is a user preferable method for calling physical security services and the system of technical solutions hardware for implementing these methods.

From the technical point of view, the mobile operator (or other unit providing integrated services) intermediating between the recipient of security and mobile communication services and security companies and using its existing infrastructure provides additional benefits and value to both the service user and security companies. Service users are more likely to choose security services in advance when they do not need to commit for a subscription fee. A security company avoids administration of some orders and payments for them, gets more orders. Usually, users with a need for the physical security conclude a contract with a single security company, in the case of the solution provided by this description, mobile operators can enter into a contract with any security companies operating in a particular region and, in the case of a critical event, they get a faster response than from a single security company.

A system of technical solutions hardware for implementing such methods includes: alarm equipment installed in the protected object, the mobile device of service recipient, data center, and monitoring and distribution station installed in a security company.

The entire system, implementing a security service more rapidly, contributes to the creation of a more secure environment.

### BRIEF DESCRIPTION OF THE DRAWINGS

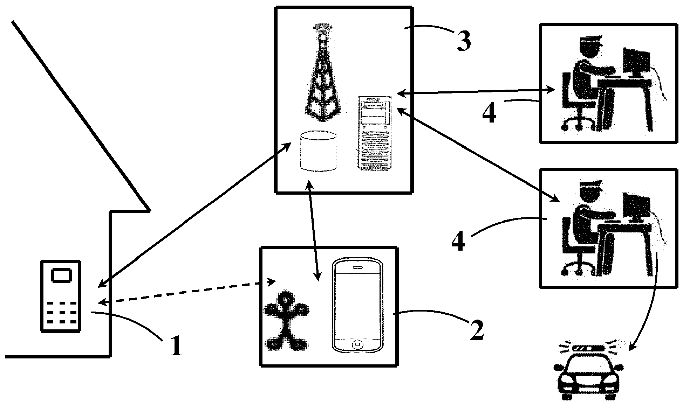

The figure shows a schematic drawing of a system implementing a method for calling a security service and paying for this service.

### DESCRIPTION OF THE PREFERRED EMBODIMENTS

This description provides a method which allows paying for security services more conveniently using only a contract with the mobile operator, faster access to the physical security service. The mobile operator (or another provider) administers the transfer of orders to the security company, or several companies and organizes payment for provided services. In this case, the user is not required to conclude an additional contract with the security company, it is paid only for actually provided security services and its paid for a single service provider for the two types of services (mobile communication and physical security), a physical security service can be provided more rapidly than in the case when a contract is signed with a single security company.

In this description, physical security actions when a security service provider goes to the protected object are generally considered as security services.

Security companies, as usual, offer to pay a subscription fee for their services, which is usually the same for a certain period of time (for example, a flat rate fee per month for the provided services). There is another method of payment, when a bit less constant periodic fee is applied and an additional fee is applied to the actions taken (e.g. arrival into the protected object when an alarm triggered) depending on the amount of actions taken. In both cases, the security service recipient shall conclude a contract with the security service provider; undertake to periodically pay a fixed amount. Besides the time spent for the analysis, conclusion and signing of the contract with the security service provider, the service recipient shall undertake to pay periodic premiums regardless of whether or not the need for the actual physical security will be.

This description provides the method for paying for security services based on real actions taken without paying subscription fees and without an additional agreement. A technical solution to implement such method of payment is provided together with the new method of payment. The essence of the invention is that the part of security services and payment for the service administration is undertaken by the mobile operator, whose services are generally used by many more users than services of security companies.

The technical solution of the invention provided by this description includes the following components:
the protected object (multi-purpose rooms, buildings, and other objects, which may need human presence on site or close to it in order to protect it), an alarm system (1) for monitoring settings of the protected object that if they are damaged or are not followed, the alarm signal is generated; an alarm system (1) comprises sensors, a panel, a communication module, which transfers an alarm signal for further processing;
a user mobile electronic device with communication facilities (hereinafter - the mobile device) (2), into which the security service recipient can receive an alarm signal and, after having made a decision, can inform interested parties;
a data processing center (3) for receiving alarm signals generated by an alarm system (1) and / or forwarded by a mobile device (2), processing alarm signals, taking functional decisions under settings, transferring instructions on the decisions taken for further processing;
monitoring and distribution station (4) installed in a security company, where, upon a the call, a security guard is sent to the location of the protected object, or it is responded otherwise according to the received signal and determined instructions / settings.

A security alarm (1) installed in the protected object is an electronic device with at least the following components:
sensors for monitoring parameters in the protected object;
alarm (1) panel, which, apart from other components, includes memory modules, processor (s) for processing the signal received from sensors, for transferring the processed signal for further processing, a communication module for transferring a signal from the alarm system (1) to remote mobile devices (2), or data center (3). In this description, the term "alarm panel" ("panel") means a device which is not only an alarm system with a user interface function, but also with functions such as all technical alarm management, control, transferring of signals to other systems; in other cases, "panel" can be called "alarm motherboard".

A function of alarm (1) sensors is to monitor the parameters and status of a protected object. Typically, alarm (1) sensors operate as converters of physical value into electrical signal, which is transferred to the alarm (1) panel. A magnetic door position sensor can be mentioned as an example of the sensor. It consists of at least two components, one of which is attached to the door frame or other stationary door component; the sensor element can measure a magnetic field crossing it; other of sensor component is attached to the door panel or other part of the door, which moves away from the first, the fixed sensor component when the doors are opened. A constant magnetic field source is located in a moving sensor component. When the sensor components move away from each other a magnetic field crossing the component attached to the frame changes, the sensor generates an electrical signal that is transferred to the alarm (1) panel. The panel captures the movement of the door panel. Alarm system (1) installed in the protected object can have sensors for a movement, glass breakage, audio, and / or other sensors; a video camera with an additional software designed to identify the necessary changes in the registered image can be used as a sensor.

Alarm (1) panel performs the signal processing function, and the interface function between a user and a signal processing device, the processed signal transfer function to other devices and other functions. Alarm (1) panel comprises at least the following components: a component receiving the signal from the sensor, signal processing component, communication module, user interface component. Alarm (1) panel receives an electrical signal from sensors, whose parameters or their changes are analyzed according to predetermined rules (settings), which can be set when manufacturing the panel, configuring the panel during installation or otherwise. Depending on the existing rule, the panel, after receiving a signal from sensors, takes a decision. Decisions may be, for example, as follows: to activate an audible alarm, to wait for a certain period of time and only then activate an audible alarm, to transfer a signal to a communication module which wirelessly or otherwise transfer a signal for further processing. **Communication module,** using a specific communication transfer technology (i.e. it can be GSM, Bluetooth, Wi-Fi, and / or others), sends a signal generated by the alarm (1) panel. One of recipients of such signal is a security service recipient. After receiving information about a critical event in the protected object, the recipient decides and selects whether to order the physical security service.

A mobile electronic device with communication facilities **(mobile device)** (2) is a mobile electronic device (e.g. mobile phone, laptop, etc.) with communication facilities used by the user. A mobile device (2) can receive the signal from the alarm system (1) of the protected object. The mentioned signal may include information about the protected object (e.g. address), the information of the alarm system (1) regarding the parameter, or status, or their change, and other data of the protected object. The user can choose how to respond to a particular case in accordance to the received signal. If necessary, the user can order a security guard to go to the protected object. In another embodiment, instructions according to which a command is generated from the received signal from the alarm (1) in the protected object can be preset in the user mobile device (2) for further processing. In this case, user participation in deciding how to react to a specific situation is unnecessary. Special software for facilitating the interface between a user and the mobile device (2) for decision-making and transferring for further processing may be installed in the user mobile device.

One of functions of the mobile device (2) and its special software is an opportunity to call the security guard, regardless of whether the alarm (1) in the protected object generated the alarm signal. In this way, the user can order a security service, call the security guard at the address where the protected object is registered or select another address. The full method to order a security service is the same as described in this description, except that the user can choose to order a security service regardless of the transfer of the alarm signal from the protected object.

**Data processing center** (3) can be realized using the mobile operator's technical infrastructure or separately from the mobile operator's infrastructure. Data processing center (3) is the technical tools provided with the software (e. g. a specialized computer with the necessary communication facilities and the required software). Data processing center (3) receives the information from the user mobile device (2). A connection between the user mobile device (2) and the data processing center (3) can be a two-way connection, i.e. both the user mobile device (2) and the data processing center can receive the signal. When a signal from the user mobile device (2) is received, the next signal is generated according to pre-defined settings, e. g. settings in the data processing center (3) can determine in accordance to the signal from the user mobile device (2) that the signal is needed to be transferred to the security company, which should send a security guard to the protected object, specifying the address, data on the alarm and / or other information.

Typically, when the data processing center (3) receives a signal from the user mobile device (2), user's contractual, legal aspects are verified, for example, whether the user has ordered that service, whether there is no long-standing debt for provided services or whether, in the case of provision of services, the allowed debt limit is not exceeded and / or others. If the examination does not disclose aspects for which a service cannot be ordered, the user can order a security service. If the examination discloses a factor for which the security service could not be performed, information on the above mentioned factors together with the notice about the trigger of the alarm (1) is sent to the user; if the user's permission is sufficient to remove it, the user is queried whether the above mentioned disturbing factor may be removed. If it is possible to remove the disturbing factor, the user agrees to remove it, and the service order processing is continued. If it is not possible to remove the disturbing factor, the security service order processing is terminated.

Other operations performed by the data processing center (3) are administration and management of financial aspects of ordered security services. Depending on agreements with the user and the security company, the assurance of financial flows shall be implemented. A user pays for the provided security service at the same time paying for mobile services, paying for the same recipient, e.g. mobile service provider or other entity that administers the entire security order process. This method of payment, when it is paid only for a single provider, only for actually provided services without steady subscription fees for security services is one of the differences of this invention from known methods of payment. User mobile device (2) transfers the data about on the event location and nature to the data processing center (3). In other embodiments, if the data transferred from the user mobile device (2) shows that the event is required to be reported to other clients of the mobile operator (s) near to the event (e.g. a need for evacuation of the surrounding locations) - this information is transferred to other clients and accounts which are near to the event. In another embodiment, if the event was not one which would have been promptly to inform the other accounts, at the end of the event, if it could be relevant event to other accounts near to the event (e.g. repeated theft, which can be prevented by increasing preventive measures), a data processing center (3) can generate and send information about the previous event to the nearby accounts and offer to join the security system, thus increasing the security in the area of the previous event.

Data processing center (3) identifies critical events to ensure proper and timely distribution of information through information channels, generates a parameter of a high priority and importance for data about such events, for which the appropriate measures for the efficient and smooth transfer of such information is selected in the information channels.

**Monitoring and distribution station (4) installed in a security company** is a component of the system, where incoming calls to go to specific objects are received: they are recorded, a call to go to the protected object is generated, and then a call to go to the protected object is transferred to the security guard. In various cases of the implementation, people can work in the station (4) installed in a security company or their functions can be performed by hardware equipped with the necessary software. In both cases, the station (4) installed in the security company receives a signal at least with the address of the protected object and information about the alarm, information describing the nature of the potential hazard. Monitoring and distribution station (4) finds the security guard nearest to the protected object or selects the security guard according to different criteria, to whom information about the alarm in the protected object is transferred. In other embodiments, the security guards may have an equipment for determining location which in case of transferring the alarm to station (4) installed in the security company would issue information about the location of security guards, their readiness to go to the protected object, and the expected time needed for a specific security guard to go to the protected object. Equipment for determining location located with the security guard can offer the fastest, most optimal path to the protected object, set at the approximate time needed to get to the protected object.

In another embodiment, e.g. if the mobile operator concludes physical security agreements with many security companies operating in a particular area, a search for the security guard who can go the protected object most rapidly and a call to go to the protected object is executed not only in one specific security company but in all companies operating in that region. In this case, the physical security service recipient gets the fastest possible service, which in each case is selected from potentially more than one security company.

In other embodiment, the alarm system (1) installed in the protected object receives a signal about an event from the sensor to which it has to be reacted according to the rules laid down, the alarm system (1) generates the instruction and data for further processing. In addition to audible alarm, light alarm activation in the protected object, further implementation can transfer a signal about data of the event occurred and the address s of the protected object to the data processing center (3). Data processing center (3) verifies legal, organizational aspects of the recipient (such as whether the user has chosen a specific security service, or have a long-term financial debt and / or others), if a factor disturbing continuing the order of security can be easily removed, an inquiry to undertake to fix a disturbing factor together with the event signal is sent to the user to a mobile device (2). With the consent of the user, security service execution instruction is transferred to the security company which, taking into account the alarm data and the address, selects security guards who could most operatively and most appropriately respond to the alarm, go to the protected object. After having provided a physical security service, a bill which will be added to the fee for mobile services is generated. After having collected payments from security service recipients, the agreed share is left for the system administrator; the other share is transferred to the security company, which no longer needs to administer payments for each of the recipients.

In another embodiment, devices, software in components, which are necessary for decision-making, can be equipped with artificial intelligence means facilitating or automating decision-making.

In another embodiment, when the number of such users becomes very large, an opportunity to monitor critical events almost in real time predicting possible further events through preventive measures to prevent the further spread of events appears.

In other embodiments, some above mentioned devices or facilities may be software that performs the function of the described device.

The functions described above are not necessarily performed in device. Some of functions which are presented that they are performed in one device can be performed in a different device. Some functions which are presented that they are performed separately in different devices can be performed in one device.

To illustrate and describe this invention, description of preferred embodiments is given above. This is not a complete or limiting description aimed at prescribing a precise form or embodiment. The description given above should be regarded more as an illustration than a constraint. Obviously, the specialists in this field may clearly see a multitude of modifications and variations. The embodiment has been selected and described so as to enable the specialists in this field to best understand the principles behind this invention and their best practical application for different embodiments with different modifications fit for a specific application or embodiment customization. The invention scope is defined by the attached claims and their equivalents wherein all the used terms have the broadest possible meanings unless stated otherwise.

Embodiments described by specialists in the respective field may contain changes that do not depart from the scope of this invention, as described in the claims given next.

## Claims

1. A method for calling a physical security service and paying for this service including the following steps:
- a critical event signal generated by an alarm system (1) installed in the protected object is transferred to the user's mobile device (2);
- if the user decides to order a security service, the signal is transferred further to a data center (3);
- having verified the recipient's commitments and the availability to obtain security services, a data center (3) orders a security guard to go to the protected object;
**characterized in that** the above mentioned verification of a security service recipient, transfer of an order and administration of payment for a service after provision of the service is executed in a data center (3), which may be located in a mobile operator's technical infrastructure.

2. A method for calling a physical security service and paying for this service according to claim 1, **characterized in that,** in the case of a critical event, security service recipient can choose whether to order a physical security service for a specific event.

3. A method for calling a physical security service and paying for this service according to above mentioned claims, **characterized in that** a service recipient pays to the mobile provider for provided physical security services.

4. A method for calling a physical security service and paying for this service according to above mentioned claims, **characterized in that** it is of two types, i.e. mobile communication and security service recipient signs only a single contract with a mobile operator.

5. A method for calling a physical security service and paying for this service according to above mentioned claims, **characterized in that,** in the case of a critical event, a company which can provide a security service most rapidly at that time is selected to go to the protected object from companies capable of providing physical security services in a specific region.

6. Hardware system for the implementation of a method for calling a physical security service and paying for this service according to all the above mentioned claims containing:
an alarm system (1) installed in a protected object, which monitors determined parameters, the state of the protected object that if they change, it generates an alarm signal about a critical event and forwards it to the user's mobile device (2), then the user chooses whether to transfer the signal for further processing
to a data center (3), which executes the processing and transfer of the order and administration of payment for the provided security service, where a search for a security company which can provide a security service most rapidly is executed;
user mobile device (2), through which the recipient is informed about the critical event and the opportunity to call the security guard,
a monitoring and distribution station (4) installed in a security company, which, having received the call, selects the most appropriate security guard and transfers him information to go to the protected object,
**characterized in that** ordering of a physical security service and paying for this service is implemented in the data processing center (3) located in the mobile operator's infrastructure.

7. Hardware system for the implementation of a method for calling a physical security service and paying for this service according to claim 5, **characterized in that** a security service can be ordered through the mobile device (2) regardless of whether or not the protected object alarm system generated the critical event alarm.

8. Hardware system for the implementation of a method for calling a physical security service and paying for this service according to claim 5, **characterized in that** it has artificial intelligence means for decision-making.
